Europäisches Patentamt

European Patent Office

Office européen des brevets

(19)

(11) Numéro de publication: **0 001 314**
**B1**

(12) **FASCICULE DE BREVET EUROPEEN**

(45) Date de publication du fascicule de brevet: **12.08.81**

(51) Int. Cl.³: **B 07 B 13/00, B 65 G 17/06**

(21) Numéro de dépôt: **78200206.7**

(22) Date de dépôt: **25.09.78**

(54) Appareil de concentration et de tri de déchets solides selon leurs formes, leurs dimensions et leur flexibilité.

(30) Priorité: **28.09.77 FR 7729135**

(43) Date de publication de la demande:
**04.04.79 Bulletin 79/7**

(45) Mention de la délivrance du brevet:
**12.08.81 Bulletin 81/32**

(84) Etats Contractants Désignés:
**BE CH DE LU NL SE**

(56) Documents cités:
**DE - A - 2 605 013**
**FR - A - 1 105 402**
**FR - A - 1 257 488**
**FR - A - 1 439 547**
**FR - A - 2 311 597**
**GB - A - 1 372 686**

(73) Titulaire: **BUREAU DE RECHERCHES**
**GEOLOGIQUES ET MINIERES**
**6-8, rue Chasseloup-Laubat**
**F-75737 Paris Cedex 15 (FR)**

(72) Inventeur: **Gony, Jean-Noel**
**32 rue de Mouillère**
**F-45100 Orléans (FR)**
Inventeur: **Cuvillier, Roger**
**Route d'Orléans clos de la barrette**
**F-45150 Darvoy par Jargeau (FR)**
Inventeur: **Clin, François**
**11, rue Théophile Chollet**
**F-45000 Orléans (FR)**
Inventeur: **Larrose, Philippe**
**Lotissement des Ormeteaux Jouy le Pothier**
**F-45370 Clery Saint Andre (FR)**
Inventeur: **Proust, François**
**181, rue de Pounelle**
**F-45370 Cléry-Saint-André (FR)**

(74) Mandataire: **Blain, Max**
**22 Avenue de l'Opéra**
**F-75001 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Appareil de concentration et de tri de déchets solides selon leurs formes, leurs
dimensions et leur flexibilté

L'invention, due à Messieurs François CLIN, Roger CUVILLIER, Jean-Nöel GONY, Philippe LARROSE et François PROUST, se rapporte à un appareil de concentration et de tri de déchets solides selon leurs dimensions et leur flexibilité, l'appareil effectuant en outre simultanément une sélection, en fonction de leurs formes, des produits volumineux ou ayant un certain encombrement.

Le tri des déchets flexibles tels que les chiffons, par exemple contenus dans les déchets solides, a déjà pu être réalisé à l'aide de trommels comprenant une virole équipée de releveurs et tournant autour de son axe, la virole entourant un extracteur à câble sans fin pourvu d'ergots entraînant les chiffons emportés par les releveurs et retombant sur le chemin de l'extracteur. Cette technique permet ainsi de réaliser des tris de materiaux de flexibilité comparable aux chiffons, tout en assurant le tri des autres matériaux au moyen de perforations de la virole de dimensions réduites, de l'ordre de 50 mm, conformément à l'art antérieur.

Les déchets comprenant des emballages en verre introduits dans le trommel étaient donc malaxés dès leur introduction, les releveurs concassant ces emballages jusqu'à ce que la dimension assez réduite des perforations de la virole permette la sortie du verre concassé. Les produits de plus grandes dimensions étaient récupérés dans les refus, les produits de dimensions moindres étant récupérés à travers des perforations de la virole prévues à cet effet. Ces divers produits présentaient l'inconvénient d'être encore mélangés à des fines et les produits papetiers contenus en refus comprenaient à la fois ferrailles, cartons plats et emballages plus ou moins volumineux.

L'objet de la présente invention est un appareil de concentration et de tri de déchets solides du type comportant une virole tournant autour de son axe et un extracteur intérieur, caractérisé en ce que les releveurs, au moins au voisinage de l'alimentation sont revêtus d'un moyen amortisseur de chocs tel que caoutchouc par exemple, et présentant un profil longitudinal en biseau diminuant jusqu'à l'alimentation, de telle sorte que, contrairement aux trommels antérieurs, les produits fragiles échappent au choc des releveurs à l'entrée de l'appareil.

On peut, de cette manière, éliminer dés l'entrée de l'appareil toute contamination des produits et notamment des produits volumineux par des fines et les cassures des verres.

Un autre objet de l'invention est un appareil de ce type, capable de favoriser la séparation des fines des déchets et des refus par le tri immédiat des emballages de verre en prévoyant des orifices de dimensions suffisantes sur la région de la virole voisine de l'alimentation, éliminant ainsi très rapidement emballages de verres non concassés et fines.

L'expérience montre alors qu'il devient possible de récupérer à la sortie du trommel des produits papetiers pratiquement exempts de fines et de débris de verre.

Un autre objet de l'invention est un appareil de ce type dont l'extracteur a pour moyen d'entraînement des produits flexibles tels que chiffons, une surface étroite, plane ou bombée, continue, telle que courroie, bande sans fin ou discontinue telle que plaques, écailles débordant dans tous les cas de part et d'autre de leur support et présentant une section ayant une surface extérieure plane ou convexe, de telle sorte que l'extracteur entraîne aussi bien des chiffons que d'autres éléments flexibles de grandes dimensions.

En outre, ce mode d'entraînement permet de supprimer les risques de bourrages dûs aussi bien au mode d'entraînement par ergots de l'art antérieur qu'aux introductions intempestives des bords des chiffons ou autres matières similaires entre le moyen d'entraînement et son support. Ce mode d'entraînement permet en outre d'éviter les risques d'encrassement par introduction de fines.

Un autre objet de l'invention est un appareil de ce genre réalisant en outre une concentration des produits papetiers plats et une séparation des produits papetiers de grandes dimensions en prévoyant la région de la virole délimitée par la sortie en forme de cage d'écureuil, l'espacement des barreaux étant au moins du même ordre de grandeur que le diamètre des perforations du corps de la virole et leur longueur étant de l'ordre de 3 à 4 fois un tel espacement.

L'expérience montre alors que l'on recueille à travers la cage les produits papetiers plats tels que journaux, magazines, cartons plats, petits emballages, les refus ne comprenant pratiquement que les produits papetiers volumineux, une telle sélection étant impossible avec les appareils antérieurs.

D'autres avantages et caractéristiques de l'invention ressortiront de la description suivante, faite en référence aux dessins annexés, qui représentent, à titre d'exemple non limitatif, un mode de réalisation de l'appareil.

Sur les dessins:

la figure 1 est la représentation schématique de l'ensemble de l'appareil vu de profil;

la figure 2 est la représentation schématique de l'appareil vu der dessus;

la figure 3 est la vue schématique de la virole avec arrachement partiel;

la figure 4 est la vue schématique de profil de l'extracteur; et

la figure 5 est la coupe partielle de l'extracteur selon la ligne V—V de la figure 4.

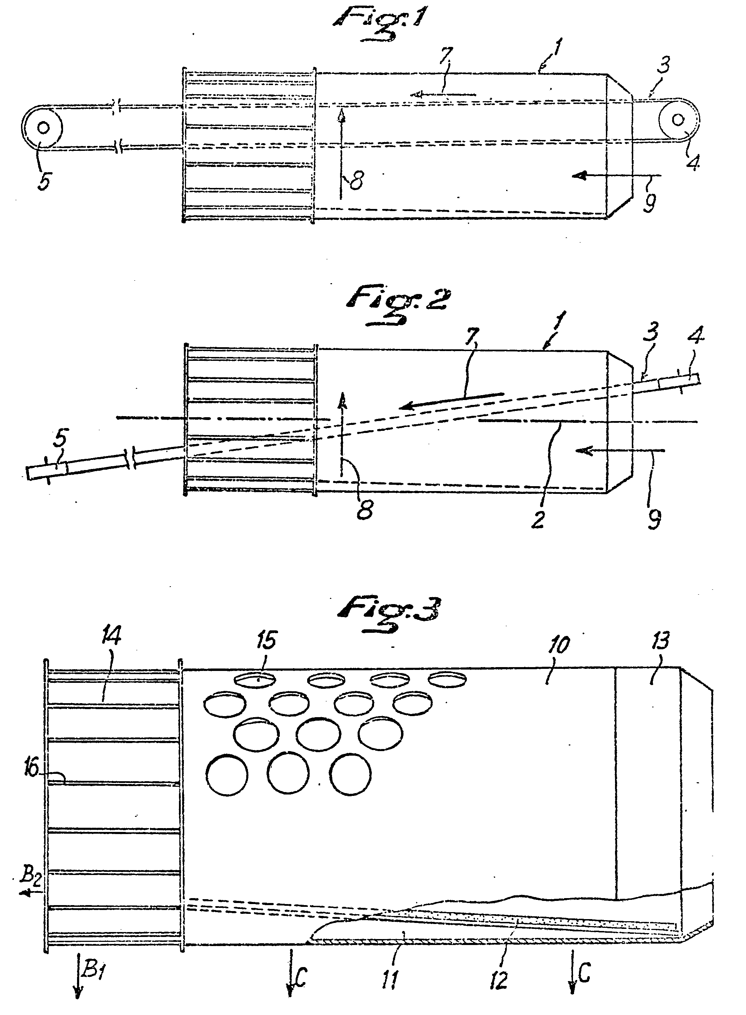

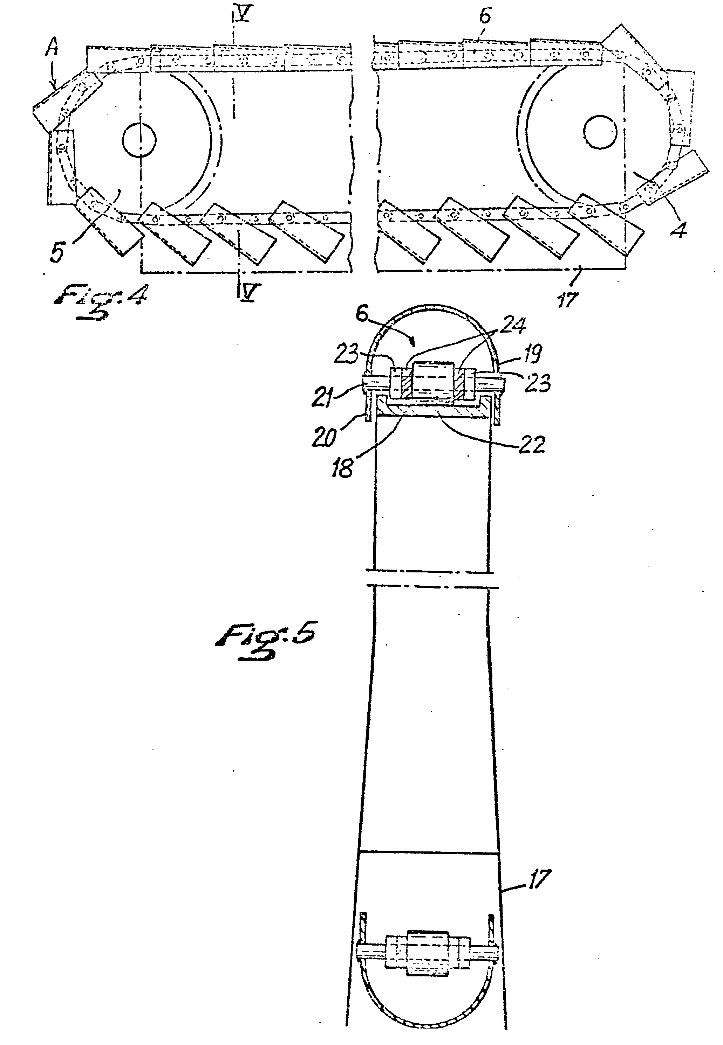

L'appareil se compose d'un trommel 1, figures 1 et 2, tournant autour de son axe 2 et d'un extracteur 3 monté pour traverser la région supérieure du trommel. Cet extracteur est réglable en position de façon à modifier sa pente et sa direction en fonction de la qualité du concentré de matériaux flexibles.

Les dispositifs d'alimentation et de déversement des produits, passés ou extraits de l'appareil, pouvant être quelconques n'ont pas été représentés.

Il en est de même en ce qui concerne les supports de l'appareil, qu'il s'agisse du support du trommel 1 ou de ceux de l'extracteur. Seules les roues dentées 4 et 5 supportant le moyen d'entraînement 6 figure 4, de l'extracteur ont été représentées figures 1 et 2. La flèche 7 indique le sens d'entraînement des produits flexibles par l'extracteur 3, la flèche 8 indiquant le sens de rotation du trommel et la flèche 9 la direction ainsi que l'emplacement préferentiel de l'introduction des déchets solides dans le trommel 1.

On a schématisé en 10, figure 3, la virole du trommel qui comporte, le long de certaines génératrices des releveurs 11 tels que celui figurant au-dessous de la partie arrachée. Ces releveurs sont biseautés de façon que les emballages en verres provenant de l'alimentation 9 ne soient pas attaqués par les releveurs 11. En outre, ces releveurs sont pourvus d'un moyen amortisseur tel qu'un revêtement elastique 12 amortissant encore les contacts entre les emballages de verre et les releveurs.

La portion de la virole 10, comprise entre la zone d'entrée ou encore entre l'extrémité d'alimentation 13 et la zone de sortie 14, est pourvue de larges perforations 15 permettant à la fraction des déchets, composée d'objets peu volumineux et pouvant comprendre des matières organiques et des emballages plastiques, d'être enrichie en emballages en verres encore en majorité intacts. Cette fraction a été symbolisée par les flèches C et s'étend sous toute la région de la virole comprenant les larges perforations 15, les releveurs 11 entraînant les parties flexibles qui retombent sur l'extracteur 3 en dégageant de plus en plus les perforations 15. Le terme de perforation doit être pris dans son sens large, les perforations pouvant être quelconques et adaptées éventuellement à certains types de déchets.

La zone de sortie 14 est constituée d'une cage d'écureuil dont les barreaux 16 ont un espacement du même ordre de grandeur que la dimension d'une maille 15. A titre d'exemple, on peut choisir des mailles 15 de l'ordre de 150 à 300 mm d'ouverture et des barreaux 16 de longueur de 600 à 1200 mm espacés de 150 à 300 mm.

Cette zone permet de recueiller en B1 des produits papetiers plats: journaux, cartons plats, fascicules, magazines ainsi que divers emballages refusés en C, et de recueillir en B2 les refus constitués de produits papetiers de grandes dimensions tels que caisses carton.

La fraction des produits flexibles enlevée par l'extracteur est représentée en A figure 4. Sur cette figure, on a choisi comme mode d'entraînement 6 du support extracteur des produits flexibles une chaîne engrenant sur les roues dentées 4 et 5, la roue motrice étant de préférence la roue 4 située du côté de l'alimentation du trommel. Le brin de retour inférieur de cette chaîne est protégé contre la projection des déchets par un carter de protection 17 visible également figure 5 entourant les parties latérales du brin retour et tout l'espace compris entre les deux brins.

La chaîne 6 est guidée inférieurement par une glissière de support et de guidage 18 et porte le support extracteur formant un fourreau de protection 19 comprenant de préférence des parties latérales 20, de dimensions suffisantes pour protéger complètement la chaîne. Ainsi, tous chiffons, tous corps flexibles et tous films plastiques de dimensions suffisantes peuvent être captés par une surface assurant un contact de bonne adhérence pour l'entraînement jusqu'à la sortie du trommel. En outre, le débordement latéral des surfaces 20 du support extracteur 19 permet de rendre minimum le contact des produits flexibles transportés avec toute partie fixe.

Selon le mode de réalisation de la figure 5, la chaîne 6 est formée de maillons 23 et 24 s'articulant sur les axes 21. Ces axes, étant parallèles, évitent tout balayage latéral de la chaîne et permettent d'entraîner tout support extracteur continu ou discontinu. Dans l'exemple représenté, les axes 21 supportent un galet de roulement 22, la glissière 18 formant chemin de roulement. Selon l'invention et lorsque le support 19 est formé d'une succession de plaques ou d'ecailles se recouvrant, on les fixe sur le dispositif d'entraînement pour qu'au cours de leur passage sur la roue de retour 5 leur extrémité avant et libre recouvre encore la partie arrière, fixée au dipositif d'entraînement de la plaque ou écaille précédente. L'expérience montre alors que cette disposition conjuguée au mode d'entraînement de la chaîne par la roue dentée située côté alimentation du trommel permet d'assurer une décharge parfaite de tous éléments flexibles.

Il va de soi que de nombreuses modifications de détails ou substitutions d'éléments peuvent être effectuées sans sortir du cadre de l'invention; qu'il s'agisse de la virole pouvant comporter des releveurs inclinés sur les génératrices ou l'extracteur dont les mailles de la chaîne pourraient être simplement revêtues d'une bande souple. De même, la partie de la virole voisine de l'alimentation peut être revêtue de caoutchouc. Quant au brin de retour composé du support extracteur et de sa chaîne d'entraînement, il peut être avantageusement prévu en dessous du trommel, notamment dans les installations importantes. Bien que dans l'exemple donné les plaques 19 du brin retour aient été représentées dans leurs positions inclinées, l'appareil peut comporter des mécanismes de verrouillage maintenant les plaques en positions horizontales après passage de la roue de retour 5. Quant aux perforations de la virole, leurs formes peuvent éventuellement être appropriées à certains éléments du tout venant.

## Revendications

1. Appareil de concentration et de tri de déchets solides du type composé d'un trommel (1), dont la virole (10), pourvue d'orifices (15—16) de dimensions différentes et de releveurs (11), tourne autour de son axe (2), et d'un extracteur intérieur (3) pour capter les produits flexibles, caractérisé en ce que les releveurs (11) sont pourvus — au moins sur leur partie voisine de l'extrémité d'alimentation du trommel — d'un revêtement (12) amortisseur des chocs et en ce qu'ils sont biseautés pour diminuer de hauteur sur toute leur longueur jusqu'à la zone d'alimentation (13).

2. Appareil suivant la revendication 1 caractérisé en ce que la virole (10) présente sur au moins une partie voisine de la zone d'alimentation (13) des perforations de larges dimensions (15) pour l'évacuation immédiate des objets fragiles.

3. Appareil de concentration et de tri de déchets solides suivant l'une quelconque des revendications 1 ou 2 dont l'extracteur (3) des produits flexibles est de dimension transversale étroite par rapport à sa longueur, caractérisé en ce que les supports (10) des produits flexibles recueillis par l'extracteur (3) sont constitués de surface défilant dans le même sens, telles que courroies, bandes sans fin et discontinues, plaques et écailles étroites (19), de section plane ou convexe débordant de part et d'autre du moyen d'entraînement (6) traversant le trommel (1), de telle sorte que les contacts des produits flexibles avec toute partie fixe (17) soient rendus minimums.

4. Appareil suivant la revendication 3 caractérisé en ce que les écailles (19) de l'extracteur (3) se recouvrent pour présenter lors de leur passage sur la roue de retour (5) située à la sortie de l'appareil une disposition telle que l'extrémité avant et libre de chaque plaque (A) ou écaille recouvre encore la partie arrière, fixée sur le dispositif d'entraînement (6), de la plaque ou écaille précédente.

5. Appareil de concentration et de tri suivant l'une quelconque des revendications 3 ou 4 dont le mouvement d'entraînement des produits flexibles s'effectue par chaîne (6) à maillons (23—24) engrenant sur des roues dentées (4—5), caractérisé en ce que la chaîne (6) est portée par une glissière de guidage (18) recouverte latéralement par le support (20—19) des produits flexibles recueillis: bande, plaques ou écailles (19) liées à la chaîne (6).

6. Appareil suivant l'une quelconque des revendications 3 à 5, caractérisé en ce que le retour de la chaîne (6) et du support extracteur (19) est protégé latéralement par un carter (17) enveloppant en outre tout l'espace compris entre les deux brins.

7. Appareil de concentration et de tri de déchets solides du type composé d'un trommel (1), dont la virole (10) est pourvue d'orifices (15) de dimensions différentes suivant l'une quelconque des revendications 1 à 6, sa zone de sortie (14) étant en forme de cage d'écureuil (16), caractérisé en ce que la zone (14) comprenant la cage d'écureuil (16) est adjacente à une zone de la virole (10) pourvue de larges ouvertures (15) formant des mailles et en ce que l'espacement des barreaux (16) de la cage est du même ordre de grandeur que l'ouverture des mailles.

8. Appareil suivant la revendication 7 caractérisé en ce que les barreaux (16) de la cage d'écureuil ont une longueur de l'ordre de trois à quatre fois l'ouverture des perforations (15) de la virole (10), leur espacement étant du même ordre de grandeur que l'ouverture des perforations.

9. Appareil suivant l'une quelconque des revendications 1 à 8, caractérisé en ce que le retour de l'extracteur (3) s'effectue en dessous du trommel (10).

10. Appareil de concentration et de tri suivant l'une quelconque des revendications 5 à 9 dont le mouvement d'entraînement des produits flexibles s'effectue par une chaîne (6) engrenant une roue de commande dentée (4) située dans la zone d'alimentation du trommel (10), caractérisé en ce que les supports des éléments flexibles recueillis sont des plaques ou écailles (19) fixées et s'inclinant sur la chaîne d'entraînement (6).

## Claims

1. Apparatus for the concentration and sorting of solid waste materials, said apparatus being of the type comprising a revolving trommel screen (1), the collar (10) of which, provided with openings (15,16) of different dimensions and with lifting devices (11), turns about its axis (2), and comprising an internal extractor (3) for collecting flexible products, characterised in that the lifting devices (11) are provided — at least over the portion thereof near the intake end of the revolving trommel screen — with a shock absorbing lining (12) and in that they (the lifting devices) are bevelled so as to reduce in height over their entire length as far as the intake zone (13).

2. Apparatus as claimed in Claim 1, characterised in that the collar (10) is provided over at least a portion close to the intake zone (13) with perforation (15) of large dimensions for the immediate evacuation of fragile objects.

3. Apparatus for the concentration and sorting of solid waste material, as claimed in either of Claims 1 or 2, wherein the extractor (3) of flexible products has a narrow transverse dimension relative to its length, characterised in that the supports (19) of the flexible products collected by the extractor (3) are formed of a surface unwinding in the same direction, such as straps, endless and discontinuous belts, narrow plates and scales (19), having a flat or convex section overlapping on both sides of the driving means (6) passing through the revolving trommel screen (1) in such manner that the contacts of the flexible products with any fixed part (17) are rendered minimal.

4. Apparatus according to Claim 3, characterised in that the scales (plates) (19) of the extractor (3) are covered in order to present, during their passage over the return wheel (5) located at the outlet of the apparatus, an arrangement such that the front and free end of each plate (A) or scale still covers the rear part, fixed to the driving device (6), of the preceding plate or scale.

5. Apparatus for concentration and sorting according to any one of Claims 3 or 4, wherein the driving movement of the flexible products is effected by chain (6) with links (23,24) engaging on toothed wheels (4,5), characterised in that the chain (6) is carried by a guide slide (18) laterally covered by the support (20,19) of the collected flexible products; belt, plates or scales (19) connected to the chain (6).

6. Apparatus according to any one of Claims 3 to 5, characterised in that the return of the chain (6) and of the extractor support (19) is laterally protected by a case (17) also envelopping the entire space comprised between the two lengths.

7. Apparatus for the concentration and sorting of solid waste materials, said apparatus being of the type comprising a revolving trommel screen (1), the collar (10) of which is provided with openings (15) of different dimensions, according to any one of Claims 1 to 6, the outlet zone (14) thereof being in the form of a squirrel's cage (16), characterised in that the zone (14) comprising the squirrel's cage (16) is adjacent to a zone of the collar (10) provided with large openings (15) forming links and in that the spacing of the bars (16) of the cage is of the same order of magnitude as the opening of the links.

8. Apparatus according to Claim 7, characterised in that the bars (16) of the squirrel's cage have a length of the order of 3 to 4 times the opening of the perforations (15) of the collar (10), the spacing thereof being of the same order of magnitude as the opening of the perforations.

9. Apparatus according to any one of Claims 1 to 8, characterised in that the return of the extractor (3) is effected below the trommel collar (10).

10. Apparatus for concentration and sorting according to any one of Claims 5 to 9, wherein the driving movement of the flexible products is effected by a chain (6) engaging on a toothed control wheel (4) located in the intake zone of the trommel revolving screen (10), characterised in that the supports of the collected flexible members are fixed plates or scales (19) inclined over the driving chain (6).

**Patentansprüche**

1. Apparat zum Konzentrieren und Sortieren fester Abfallgegenstände, bestehend aus einer sich um ihre Achse (2) drehenden Trommel, deren Mantel mit Öffnungen (15, 16) verschiedener Größe und mit Hebern (11) versehen ist, und aus einer inneren Abführeinrichtung (3) zum Erfassen flexibler Gegenstände, dadurch gekennzeichnet, daß die Heber (11) mindestens an ihrem dem Zuführungsende der Trommel benachbarten Bereich mit einer stoßdämpfenden Abdeckung (12) versehen sind und über ihre gesamte Länge eine bis zur Zuführungszone (13) der Trommel abgeschrägt bzw. allmählich abnehmende Höhe aufweisen.

2. Apparat nach Anspruch 1, dadurch gekennzeichnet, daß der Mantel (10) mindestens auf einem der Zuführungszone (13) benachbarten Abschnitt Öffnungen (15) mit großen Abmessungen zur unmittelbaren Abgage zerbrechlicher Gegenstände enthält.

3. Apparat zum Konzentrieren und Sortieren von festen Abfallgegenständen nach Anspruch 1 oder 2, dessen Auswerf- oder Abführeinrichtung (3) für flexible Gegenstände eine im Vergleich zu ihrer Länge geringe Breite aufweist, dadurch gekennzeichnet, daß die Mitnehmer (19) für die durch die Abführeinrichtung (3) gesammelten flexiblen Gegenstände aus in der gleichen Richtung ablaufenden Oberflächen, wie endlosen oder endlichen Förderbändern, schmalen Platten und Schuppen (19) mit einem ebenen oder konvexen Querschnitt bestehen, der beiderseits über die die Trommel (1) durchquerende Antriebseinrichtung (6) derart hinausragt, daß Berührungen der flexiblen Gegenstände mit einem beliebigen ortsfesten Abschnitt (17) der Abführeinrichtung so gering wie möglich bleiben.

4. Apparat nach Anspruch 3, dadurch gekennzeichnet, daß sich die Schuppen (19) der Abführeinrichtung (3) überdecken, um bei ihrem Lauf über das am Ausgang des Apparates angeordnete Umlenkrad (5) eine solche Lage einzunehmen, daß das vorangehende und freie Ende jeder Platte (A) oder Schuppe noch den rückwärtigen Teil der auf der Antriebseinrichtung (6) befestigten vorangehenden Platte oder Schuppe überdeckt.

5. Apparat zum Konzentrieren und Sortieren nach einem der Ansprüche 3 oder 4, bei dem zur Antriebsbewegung der flexiblen Gegenstände eine aus Gliedern (23, 24) bestehende Kette (6) vorgesehen ist, die in Kettenräder (4, 5) eingreift, dadurch gekennzeichnet, daß die Kette (6) durch eine Gleitführungsschiene (18) unterstützt ist, die seitlich von den mit der Kette (6) verbundenen Mitnehmern (19, 20), wie Förderban, Platten oder Schuppen (19) für die gesammelten flexiblen Gegenstände überdeckt ist.

6. Apparat nach einem der Ansprüche 3 bis 5, dadurch gekennzeichnet, daß der Rücklauftrum der Kette (6) und deren Abführ-Mitnehmer (19) seitlich durch einen Rahmen (17) geschützt bzw. abgedeckt sind, der im übrigen den gesamten Raum zwischen den beiden Kettentrums einschließt.

7. Apparat zum Konzentrieren und Sortieren von festen Abfallgegenständen nach einem der vorhergehenden Ansprüche, bestehend aus einer Trommel (1), deren Mantel (10) Öffnungen (15) verschiedener Abmessungen enthält und deren Austrittszone (14) die Form eines offenen Laufkäfigs (16) aufweist, dadurch gekennzeichnet, daß die den Laufkäfig (16) enthaltende Austritts, zone (14) an einen Bereich des Trommelmantels (10), der mit ein Maschengitter bildenden großen Öffnungen (15) versehen ist, und daß die Abstände zwischen den Stangen (16) des Laufkäfigs die gleiche Größenordnung wie die Maschenöffnungen aufweisen.

8. Apparat nach Anspruch 7, dadurch gekennzeichnet, daß die Stangen (16) des Laufkäfigs etwa 3- bis 4mal solang sind wie die Größe der Öffnungen (5) des Trommelmantels (10), während ihr Abstand in der gleichen Größenordnung liegt wie die Größe der Öffnungen.

9. Apparat nach einem der Ansprüche 1 bis 8, dadurch gekennzeichnet, daß die Rückführrung der Abführeinrichtung (3) unterhalb der Trommel (10) angeordnet ist.

10. Apparat zum Konzentrieren und Sortieren nach einem der Ansprüche 5 bis 9, bei dem die Antriebsbewegung auf die flexiblen Gegenstände mit Hilfe einer Kette (6) übertragen wird, die mit einem in der Zuführungszone der Trommel (10) angeordneten verzahnten Antriebskettenrad (4) in Eingriff steht, dadurch gekennzeichnet, daß die Mitnehmer für die gesammelten flexiblen Gegenstände aus Platten oder Schuppen (19) bestehen, die auf der Antriebskette schwenkbar bzw. neigbar gehalten sind.

0 001 314

Fig.1

Fig.2

Fig.3

1

Fig.4

Fig.5